# EUROPEAN PATENT SPECIFICATION

(11) **EP 1 176 338 B1**
(45) Date of publication and mention of the grant of the patent: **16.02.2005**
(21) Application number: 01116852.3
(22) Date of filing: 10.07.2001
(51) Int. Cl.: F16F 15/134

(54) **Torsional vibration damper**
Torsionschwingungsdämpfer
Amortisseur de vibrations torsionelles

(30) Priority: 24.07.2000 JP 2000222914; 21.11.2000 JP 2000353724
(43) Date of publication of application: 30.01.2002
(73) Proprietor: Valeo Unisia Transmissions Kabushiki Kaisha, Atsugi-shi, Kanagawa 243-0213 (JP)
(72) Inventor: Shibata, Daisuke, Atsugi-shi, Kanagawa 243-0213 (JP); Inoue, Atsushi, Atsugi-shi, Kanagawa 243-0213 (JP); Sato, Kenji, Atsugi-shi, Kanagawa 243-0213 (JP); Shinozaki, Susumu, Atsughi-shi, Kanagawa 243-0213 (JP); Ichinose, Masato, Atsughi-shi, Kanagawa 243-0213 (JP)
(74) Representative: Weber, Joachim, Dr.

(56) References cited:
- DE-A- 3 831 768
- DE-A- 19 819 824
- US-A- 2 251 128
- US-A- 4 722 715
- US-A- 4 890 706
- US-A- 5 125 872
- US-A- 5 996 761

## Description

### BACKGROUND OF THE INVENTION

The present invention relate in general to torque transmitting devices, particularly for motor vehicles for transmitting torque from engines to transmissions. More particularly, the present invention relates to torsional vibration dampers of the kind suited for use with motor vehicle engines.

An example of this kind of torsional vibration damper is disclosed in Japanese Patent Provisional Publication No. 63-26423. The torsional vibration damper includes a flywheel element drivingly connected to an input side element, i.e., a crankshaft of an engine, a damper hub rotatable relative to the flywheel element and drivingly connected to an output side element, i.e., a transmission side element, the damper hub having a plurality of radial hub arms, and a plurality of compression springs disposed circumferentially between the flywheel element and the hub arms of the damper hub for resiliently and drivingly connecting between the crankshaft and the transmission side element..

The flywheel element has a spring retaining portion in the form of an annular chamber in which the compression springs are disposed.

### SUMMARY OF THE INVENTION

In operation, the compression springs are held out of contact from an inner surface of the spring retaining portion when the deflection of each compression spring is small. However, when the compression springs are compressed to have a large deflection, they are bent radially outward and brought into contact with the inner surface of the spring retaining portion. By such contact or engagement with the compression springs, the inner surface of the spring retaining portion is liable to be worn. Particularly, when the flywheel element driven by the crankshaft at high speed, the compression springs are subjected to a large centrifugal force, therefore tend to be bent further outward and urged against the inner surface of the spring retaining portion with a larger force, thus causing a further accelerated wear of the inner surface of the spring retaining portion.

As a result, the space between the compression springs and the inner surface of the spring retaining portion of the flywheel element is increased so that the compression springs cannot be held stable within the spring retaining portion, thus lowering the torsional vibration absorbing efficiency by the compression springs and the durability of the torsional vibration damper itself. Further, when the compression springs are urged against the inner surface of the spring retaining portion of the flywheel element with an excessively large force, there is a possibility that a large hysteresis in the torsional vibration damping action is caused, thus disabling the torsional vibration damper from attaining stable torsional vibration damping characteristics.

US 4,722,715 describes a torsional damper device comprising two coaxial parts disposed to rotate relative to each other within defined limits of relative angular displacement. Circumferentially acting elastic members are adapted to operate circumferentially between the coaxial parts over part at least of such relative angular displacement. The elastic members includes at least two coil springs spaced circumferentially along a common circumference of the device. Retainers associated with the coil springs, common to all the coil springs, are adapted to retain the coil springs against the action of centrifugal force. The retainers are disposed at least in part radially outside the common circumference.

An object of the present invention is to provide a torsional vibration damper having a ring member, which is prevented from axial inclination during operation.

The solution of the object is achieved by the combination of features of claim 1. The dependent claims contain advantageous embodiments of the present invention.

The other objects and features of this invention will become understood from the following description with reference to the accompanying drawings.

### BRIEF DESCRIPTION OF THE DRAWINGS

Fig. 1 is a sectional view taken on the line I-I in Fig. 2, showing a torsional vibration damper;
Fig. 2 is a partially cutaway plan view of the torsional vibration damper of Fig. 1;
Fig. 3 is a view similar to Fig. 1 but shows a further torsional vibration damper;
Fig. 4 is a view similar to Fig. 1 but shows a first embodiment of the present invention;
Fig. 5 is a view taken in the direction indicated by the arrow V in Fig. 4;
Fig. 6 is a view similar to Fig. 1 but shows a second embodiment; and
Fig. 7 is a view taken in the direction indicated by the arrow VII in Fig. 6.
Fig. 8 is a sectional view taken on the line VIII-VIII in Fig. 9, showing a torsional vibration damper;
Fig. 9 is a partly cutaway plan view of the torsional vibration damper of Fig. 8; and
Fig. 10 is an elevational view of a ring member utilized in the torsional vibration damper of Fig. 9.

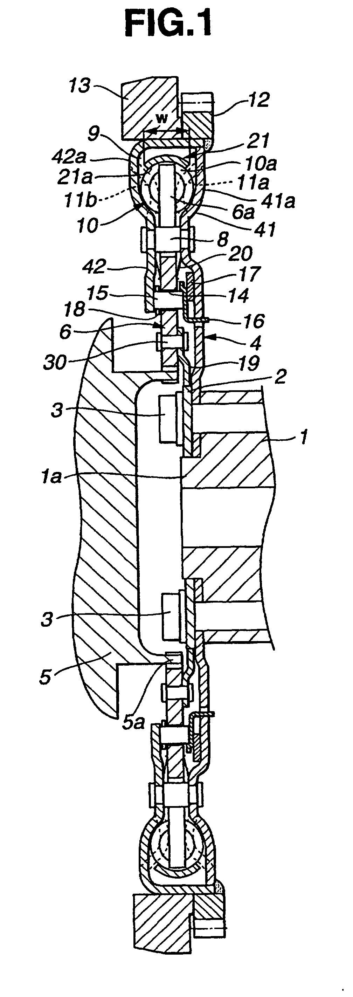

It has to be mentioned that the torsional vibration dampers shown in Figs. 1-3 and 8-1 represent only background art and do not form part of the invention.

### DESCRIPTION OF THE PREFERRED EMBODIMENTS

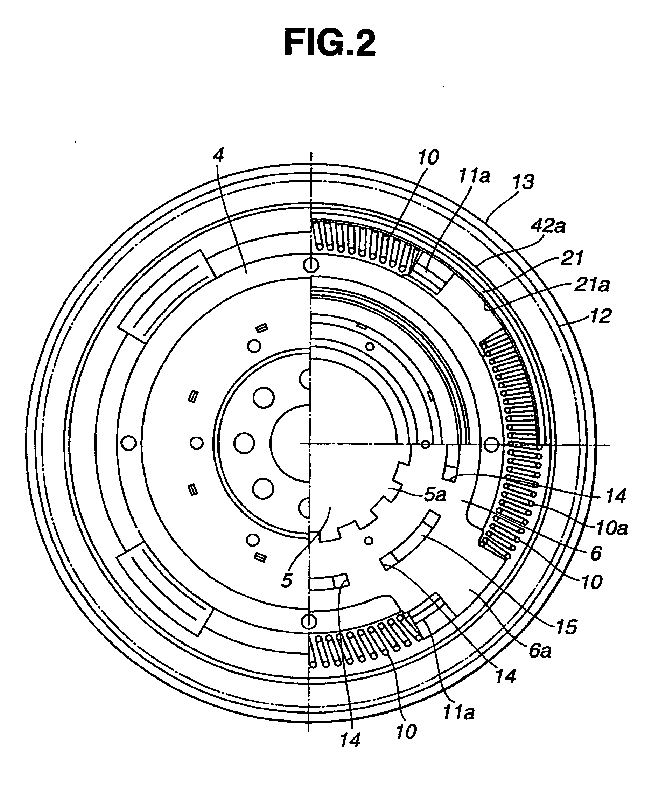

Figs. 1 and 2 show a known torsional vibration damper which is adapted to constitute a flywheel of an internal combustion engine, i.e., adapted to be operatively connected to a crankshaft 1 of the engine. The torsional vibration damper includes a drive plate assembly 4 connected to an end 1a of the crankshaft 1 with a plurality of bolts 3, with a reinforcement plate 2 being interposed therebetween, and a damper hub 6 splined to an end portion 5a of an output member 5 which also serves as a transmission side input member. The damper hub 6 is disposed so as to be rotatable relative to the drive plate 4.

The drive plate assembly 4 includes a pair of first and second annular drive plates 41 and 42 having radially outer portions 41a and 42a which are axially spaced from each other and connected by means of a plurality of stopper pins 8. Between the radially outer portions 41a and 42a is defined an annular chamber 9 within which four compression coil springs 10 are disposed in an circular array and at equal intervals, i.e., the compression springs 10 are disposed in such a manner that respective circumferentially central portions thereof are positioned at intervals of 90 degrees. The radially outer portions 41a and 42a of the first and second drive plates 41 and 42 are respectively formed with seat sections 11a and 11b which protrude into the annular chamber 9 in a way as to be opposed to each other. The compression springs 10 have arcuated center axes and are disposed between the seating sections 11a and 11b and hub arms 6a of the hub 6.

The radially outer portion 42a of the second drive plate 42 has a nearly L-like cross section and welded at an end to a mating end of the radially outer portion 41a of the first drive plate 41. Further, the radially outer portion 42a of the second drive plate 42 has an outer circumferential surface to which are welded a ring gear 12 and an annular mass 13. In the meantime, the first and second drive plates 41 and 42 have at radially inner potions thereof opposite inner surfaces between which is interposed a sealing member 20 for providing a seal between each of the inner surfaces and the damper hub 6.

The damper hub 6 is formed with a plurality of arcuated holes 14 which are arranged in a circular array and at equal intervals. Within the arcuated holes 14 are disposed friction material members 15 which are shaped and sized so as to allow the arcuated holes 14 to have spaces at opposite circumferential ends of the friction materials 15, i.e., so as to allow the arcuated holes 14 to have spaces provided in the circumferential or torsional direction of the damper hub 6. Each friction material member 15 has an end in contact with an inner surface of the radially inner portion of the second drive plate 42 and another end in engagement with a Belleville spring 17 by way of a friction plate 16. By this, each friction material member 15 is urged by the spring 17 against the inner surface of the radially inner portion of the second drive plate 42, i.e., in the left-hand direction in Fig. 1. The friction material members 15 are connected circumferentially with one another by a friction material holder 18. Further, to a radially inner portion of the damper hub 6 is fixedly attached by means of rivets 30 a guide member 19 which has a radially inner end portion opposed to the radially inner portion of the first drive plate 41 and which cooperates with the reinforcement plate 2 to center the damper hub 6.

On the radially outer side of the compression springs 10 is disposed a circular ring member 21 which is endless or seamless. The circular ring member 21 is formed from a sheet metal by pressing and is so sized as to have an inner diameter which is a little larger than the diameter of the radially outer boundaries or peripheries of the compression springs 10, i.e., the diameter of a circle with which each of the compression springs 10 is brought into contact at a radially outer boundary or periphery thereof. Further, the ring member 21 has such a width W as to cover about one fourth of the external surface of each compression spring 10. Further, the ring member 21 has an inner circumferential surface 21a which is part-circular in cross section and extends axially along the external surface of each of the compression springs 10. The radius of curvature of the part-circular cross section of the inner circumferential surface 21a is nearly equal to that of a circular cross section of the external surface of each compression spring 10. By this, in operation of the compression springs 10, i.e., when the coil springs 10 are compressed or expanded, they are moved along in line contact with the inner circumferential surface 21a of the ring member 21.

Accordingly, a torque supplied from the crankshaft 1 to the drive plate assembly 4 during the operation of the engine causes the seating sections 11a and 11b to push an end of each of the compression springs 10. By this, each compression spring 10 is compressed between the seating sections 11a and 11b and the hub arm 6a of the damper hub 6. In this instance, the compression springs 10 are subjected to a force directed radially outward and thus held in contact at the radially outer boundaries or peripheries 10a with the inner circumferential surface 21a of the ring member 21. By such compression, a force is stored in each compression spring 10 and then transmitted to the output member 5, i.e., the transmission side element by way of the damper hub 6 and the radially inner splined portion 5a thereof.

In this instance, the compression springs 10 perform a vibration absorbing action by the effect of a long torsional amplitude, whereas the ring member 21 is caused to move circumferentially due to a frictional resistance between the ring member 21 and the compression springs 10.

Further, as described above, when the drive plate assembly 4 and damper hub 6 are rotated relative to each other, each friction member 15 having been disposed so as to provide a space at one end is brought into contact with the corresponding circumferential end of each arcuated hole 14 and is moved relative to the friction plate 16 and the drive plate assembly 4, thus causing a hysteresis torque.

As mentioned above, when the compression springs 10 are compressed and deflected, they are brought into contact at the radially outer boundaries or peripheries 10a thereof with the inner circumferential surface 21a of the ring member 21. In this instance, since the ring member 21 is not pushed against any one of other constituent parts of the torsional damper, there is not caused a large hysteresis even when the compression springs 10 are subjected to a centrifugal force. Accordingly, stable torsional vibration damping characteristics are attained.

Furthermore, the inner circumferential surface 21a of the ring member 21 is formed so as to have a part-circular cross sectional shape which corresponds in radius of curvature to the cross sectional shape of the external surface of each compression spring 10, and the compression springs 10 are disposed so as to be partly covered by the ring member 21. In this instance, since the compression springs 10 are not brought into point contact but into line contact with the inner circumferential surface 21a of the ring member 21, the contact pressure with which the compression springs 10 are brought into contact with the inner circumferential surface 21a of the ring member 21 can be reduced or made smaller and therefore the friction between the both 21 and 10 can be made smaller.

Further, the inner circumferential surface 21a of the ring member 21 is entirely formed into a circular ring and there does not exist any proj ection at anyplace of the inner circumferential surface 21a. By this, assembling of the torsional vibration damper can be made irrespective of the positions of the ring member 21 and the compression springs 10 relative to each other, thus enabling the assembly work to be done with a good efficiency. Namely, the compression springs 10 can be installed in place all at once by holding them all together, the assembly work can be done very easily. Further, even when the positions of the compression springs 10 in operation are varies relative to the ring member 21, there is not caused any variation in support or holding of the compression springs 10 by the ring member 21, thus enabling the compression springs 10 to execute a stable operation.

Further, since the ring member 21 supports the compression springs 10 in such a manner that the radially outer boundaries 10a of the compression springs 10 are partly enclosed or sheathed in the ring member 21, it can assuredly and stably support the compression springs 10 at all times even if the compression springs 10 in operation are circumferentially moved relative to the ring member 21, and stable operation of the compression springs 10 can be attained.

Further, since the inner circumferential surface 21a of the ring member 21 is par-circular in cross section, the ring member 21 has a high modulus of section and a large strength against a radial force applied thereto. As a result, the ring member 21 can sustain a pushing force resulting from a centrifugal force of the compression springs 10 when the crankshaft 1 is driven at a higher speed. Further, the ring member 21 can sustain a larger radial pushing force caused by the compression springs 10 having a higher spring constant.

Since the inner circumferential surface 21a of the ring member 21 is shaped so as to be part-circular in cross section, it becomes possible to store or hold lubrication oil such as grease inside thereof, thus making it possible to attain smooth expanding and contracting action of the compression springs 10.

Further, as mentioned above, since the inner circumferential surface 21a of the ring member 21 is disposed so as to fit on the radially outer boundaries 10a of the compression springs 10, the ring member 21 is axially located in position by the compression springs 10 and has a least possibility of inclining axially. For this reason, it is less possible that the ring member 21 is abuttingly engaged with the first and second drive plates 41 and 42 of the drive plate assembly 4. As a result, noises resulting from such abutment and wear of such constituent parts can be reduced.

Since the ring member 21 can be formed from a sheet metal by pressing, the ring member 21 can be manufactured with an efficient work and therefore at low cost.

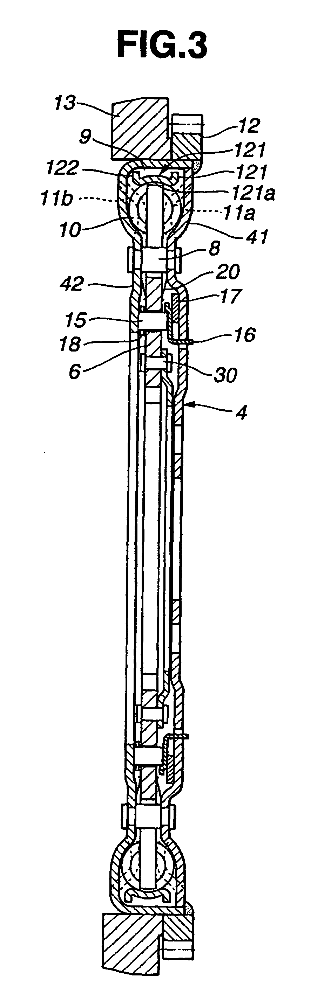

Fig. 3 shows another torsional vibration damper. In Fig. 3, like parts and portions to those of the embodiment of Figs. 1 and 2 are designated by the like reference characters and will not described again. In this embodiment, the ring member 121 has at the opposite axial ends thereof a pair of integral reinforcement ribs 122 and 122 in the form of radially outward flanges. By the reinforcement ribs 122 and 122, the overall strength of the ring member 121, particularly the strength or rigidity against a radial force can be increased. By this, the ring member 121 can support the compression springs 10 with an increased rigidity, particularly radially, and therefore with an increased assuredness. Further, the ring member 121 can have an improved durability.

Except for the above, this embodiment is substantially similar to the torsional vibration damper of Figs. 1 and 2 and can produce substantially the same effect.

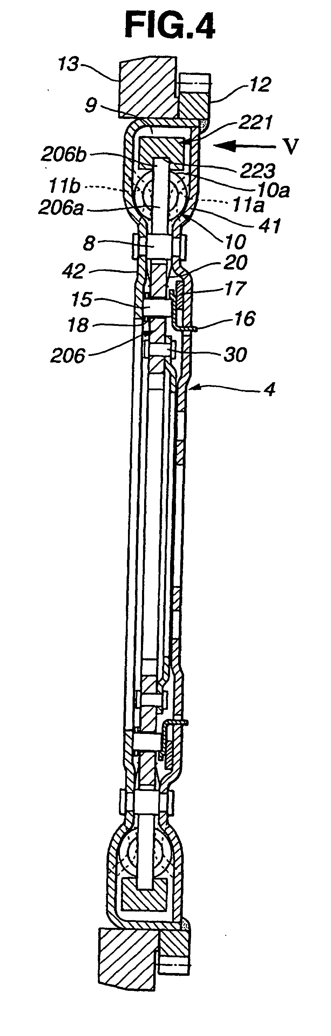

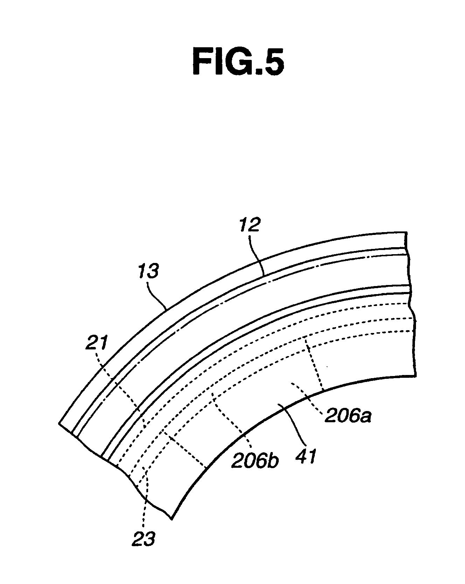

Figs. 4 and 5 show a first embodiment according to the present invention. In Figs. 4 and 5, like parts and portions to those of the embodiment of Figs. 1 and 2 are designated by the like reference characters and will not described again. In Fig. 3, like parts and portions to those of the embodiment of Figs. 1 and 2 will be designated by the like reference characters and will not described again. In this embodiment, the hub arm 206a of the damper hub 206 is extended radially more outward than the radially outer boundaries 10a of the compression springs 10. Further, the ring member 221 is not in the form of a thin, circular strip but a relatively thicker, circular strip. Namely, the ring member 221 is formed relatively thicker and have a generally rectangular cross section. At the inner circumferential surface and at the axially central portion thereof, the ring member 21 is formed with a groove 223 in which the radially outer end potions 206b of the hub arms 206a are fitted.

The groove 223 is formed throughout the inner circumferential surface of the ring member 221 so as to have a circular configuration or shape. The groove 223 has such a depth and width that allow the radially outer end portions 206b of the hub arms 206 are slidable therewithin.

Accordingly, by this embodiment, the ring member 221 has a larger rigidity in its entirety and thus can support the compression springs 10 more stably and assuredly.

Further, the ring member 221 is fitted at the groove 223 on the radially outer end portions 206b of the hub arms 206a and thereby supported by the damper hub 206. By this, the ring member 221 is assuredly prevented from inclining axially of the torsional vibration damper during operation, thus being assuredly prevented from abutting engagement with the first and second drive plates 41 and 42 of the drive plate assembly 4.

Except for the above, this embodiment is substantially similar to the torsional vibration damper of Figs. 1 and 2 and can produce substantially the same effect.

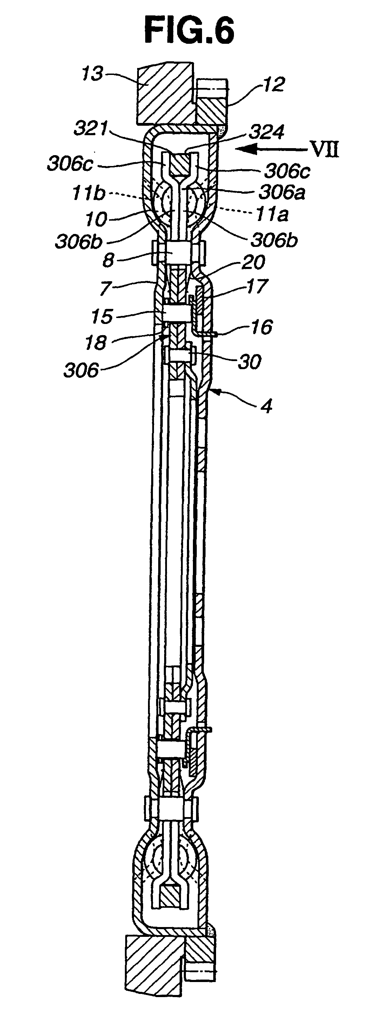

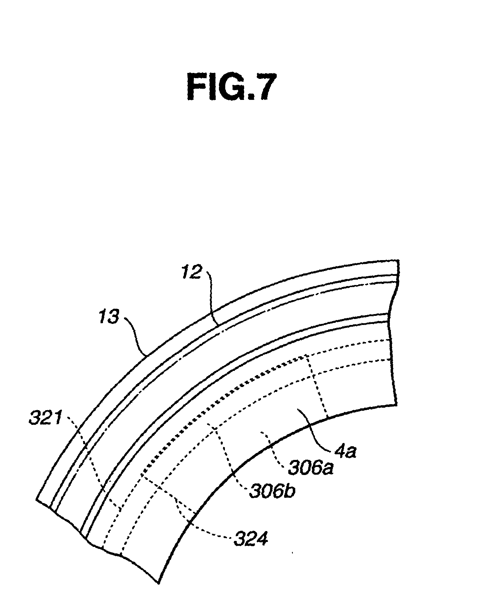

Figs. 6 and 7 show a second embodiment of the present invention. In Figs. 6 and 7, like parts and portions to those of the embodiment of Figs. 1 and 2 are designated by the like reference characters and will not be described again. In this embodiment, the damper hub 306 is formed from a pair of hub plates 306b and 306b which are joined together. The hub arms 306a are extended radially more outward than the radially outer boundaries 10a of the compression springs 10. The radially outer end portion 306c of each hub plate 306b is bent so as to have an L-shaped section so that a groove 324 of a rectangular cross section is formed between the radially outer end portions 306c and 306c of the hub plates 306b and 306b, i.e., at the radially outer end portion of each hub arm 306a. On the other hand, the ring member 221 is shaped so as to have a relatively smaller cross sectional area and be slidably received in the groove 324 of each of the hub arms 306a.

Accordingly, by this embodiment, the ring member 321 is held assuredly and stably within the grooves 324 and is prevented from inclining axially, thus being assuredly prevented from abutting engagement with the first and second drive plates 41 and 42 of the drive plate assembly 4.

Except for the above, this embodiment is substantially similar to the torsional vibration damper of Figs. 1 and 2 and can produce substantially the same effect.

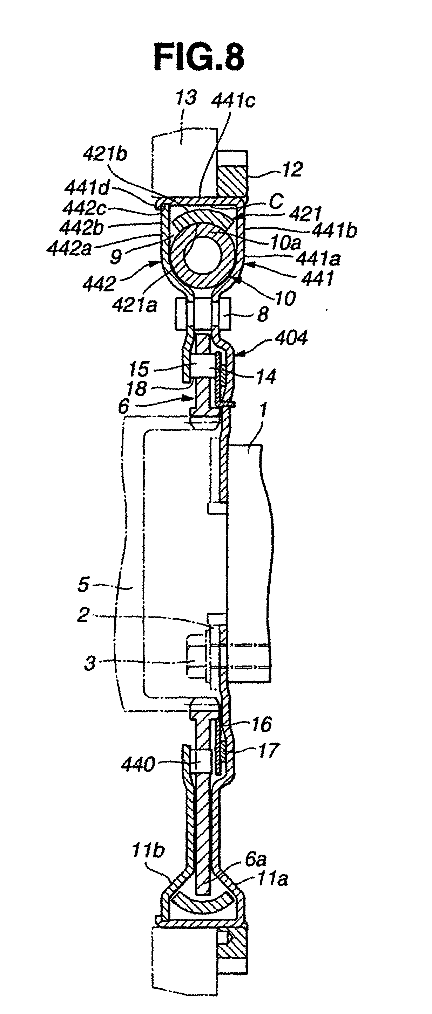

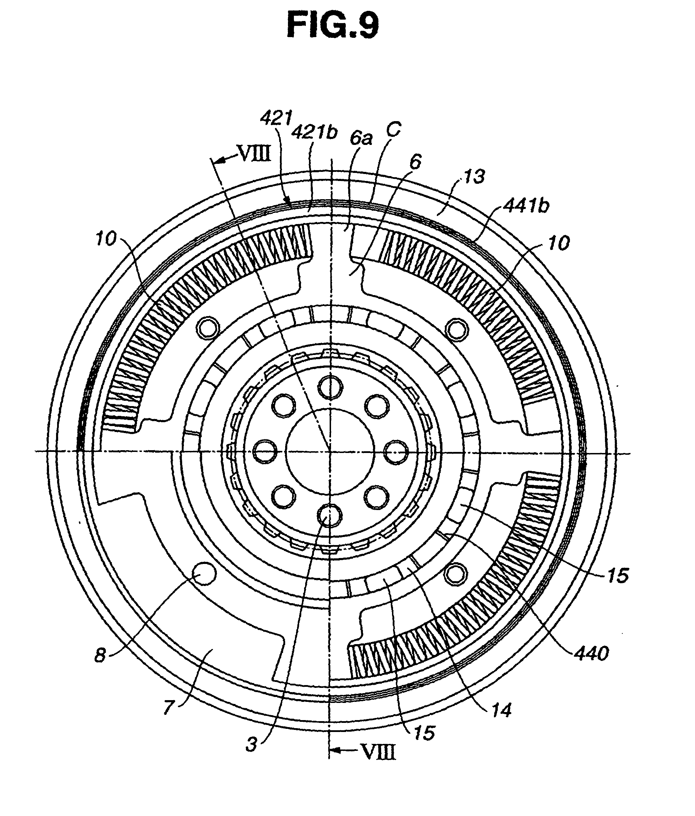

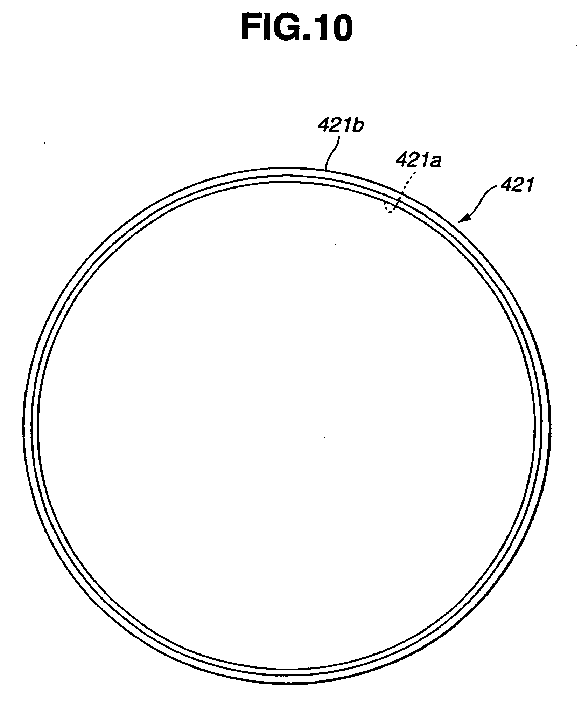

Figs. 8 to 10 show another torsional vibration damper. In Figs. 8 to 10, like parts and portions to those of the embodiment of Figs. 1 and 2 are designated by the like reference characters and will not described again. In this embodiment, a space or clearance C is provided between the radially outer circumferential surface 421b of the ring member 421 and the associated inner circumferential surface of the drive plate assembly 404 as shown in Fig. 8.

More specifically, the radially outer end portion 441a of the drive plate 441 has an L-shaped cross section and includes a radially extending circumferential wall section 441b and an axially extending circumferential wall portion 441c extending from the radially outer end of the circumferential wall section 441b. The axially extending circumferential wall section 441c is generally uniform in diameter. The radially outer end portion 442a of the drive plate 442 has a radially extending circumferential wall section 442b generally in parallel with the radially extending circumferential wall section 441b of the drive plate 441. The radially extending circumferential wall section 442b of the drive plate 442 has a radially outer end 442c connected to an end 441d of the axially extending circumferential wall section 441c of the drive plate 441 by caulking. The above described predetermined space C is thus defined between the outer circumferential surface 421b of the ring member 421 and the inner circumferential surface of the axially extending circumferential wall section 441c of the drive plate 441.

Further, a plurality of friction members 440 are arranged in a circular array and along the same circle as that along which the friction members 15 are disposed.

By the provision of the predetermined space C between the outer circumferential surface 421b of the ring member 421 and the axially extending circumferential wall section 441c of the drive plate 441 surrounding the ring member 421, the outer circumferential surface 421b of the ring member 421 is assuredly prevented from being brought into contact with the axially extending circumferential wall section 441c of the drive plate 441 even when the compression springs 10 are moved relative to the ring member 421 to perform a vibration damping action while being held in contact with the inner circumferential surface 421a of the ring member 421. Accordingly, since the ring member 421 is not pushed against any constituent part, it is not causative of a large hysteresis in the torsional damping action. Therefore, the torsional vibration damper can attain stable torsional vibration damping characteristics.

Except for the above, this embodiment is substantially similar to the previous torsional vibration damper of Figs. 1 and 2 and can produce substantially the same effect.

From the foregoing, it will be understood that according to the present invention the compression springs in operation are caused to contract and expand to perform a vibration damping action while be held in contact with the inner circumferential surface of the ring member. By this, the compression springs are prevented from protruding radially outward excessively. Further, the ring member is adapted so as not to be pressed against any other constituent part so that the torsional vibration damper of this invention does not cause any hysteresis in a vibration damping action.

Although the invention has been described above by reference to certain embodiments of the invention, the invention is not limited to the embodiments described above. Modifications and variations of the embodiments described above will occur to those skilled in the art, in light of the above teachings. The scope of the invention is defined by the following claims.

## Claims

1. A torsional vibration damper comprising:
- a pair of first and second torque transmitting elements (1, 5) rotatable relative to each other;
- a damper hub (206; 306) connected to the first torque transmitting element (5) for rotation therewith and having a plurality of circumferentially spaced radial hub arms (206a; 306a);
- a plurality of compression springs (10) disposed between the second torque transmitting element (1) and the hub arms (206a; 306a); and
- a ring member (221; 321) disposed radially outside the compression springs (10) and having an inner circumferential surface held in contact with radially outer boundaries (10a) of the compression springs (10);
**characterized in that**
- either said ring member (221) has a rectangular cross section and has at the inner circumferential surface a circular groove (223), the hub arms (206a; 306a) of the damper hub (206; 306) having radially outer end portions (206b) circumferentially movably fitted in the groove of the ring member (21) and thereby circumferentially movably supporting thereon the ring member (21); or
- said hub arms (206a; 306a) of the damper hub (206; 306) have at radially outer end portions thereof part-circular grooves in which the ring member (321) is circumferentially movably fitted.

2. A torsional vibration damper according to claim 1, further comprising a drive plate assembly (4) connected to the second torque transmitting element (1) for rotation therewith and having an annular chamber (9) in which the compression springs (10) are disposed, the annular chamber (9) having a circumferential surface disposed opposite to an outer circumferential surface of the ring member, wherein a predetermined space is provided between the outer circumferential surface of the ring member and the circumferential surface of the annular chamber.

3. A torsional vibration damper according to claim 2, wherein the drive plate assembly (4) comprises a pair of first and second drive plates (41, 42) which define therebetween the annular chambers (9), the first and second drive plates having joining ends extending circumferentially along the annular chamber (9) and joined together at the joining ends so as to constitute an integral unit.

## Patentansprüche

1. Torsionsschwingungsdämpfer mit:
- einem Paar erster und zweiter Drehmoment-Übertragungselemente (1, 5), die relativ drehbeweglich zueinander sind;
- einer Dämpfernabe (206, 306), die mit dem ersten Drehmoment-Übertragungselement (5) zur Drehung verbunden ist und eine Vielzahl an umfangsseitig mit Zwischenraum angeordneten, radialen Nabenarmen (206a, 306a) aufweist;
- einer Vielzahl an Druckfedern (10), die zwischen dem zweiten Drehmoment-Übertragungselement (1) und den Nabenarmen (206a, 306a), angeordnet sind; und
- einem Ringelement (221, 321), das radial außerhalb der Druckfedern (10) angeordnet ist und eine innere Umfangsfläche aufweist, die mit den radialen äußeren Begrenzungen (10a) der Druckfedern (10) in Kontakt gehalten wird;
**dadurch gekennzeichnet, dass**
- eines der Ringelemente (221) einen rechteckigen Querschnitt und an der inneren Umfangsfläche eine ringförmige Nut (223) aufweist, wobei die Nabenarme (206a, 306a) der Dämpfernabe (206, 306) radiale äußere Endbereiche (206b) aufweisen, die in der Nut des Ringelements (21) umfangsmäßig beweglich eingepasst sind und dadurch auf dem Ringelement (21) umfangsmäßig beweglich abgestützt sind; oder
- die Nabenarme (206a, 306a) der Dämpfernabe (206, 306) an den radialen äußeren Endbereichen teil-kreisförmige Nuten aufweisen, in die das Ringelement (321) umfangsmäßig beweglich eingepasst ist.

2. Torsionsschwingungsdämpfer gemäß Anspruch 1, der ferner folgendes aufweist: eine Antriebsplattenanordnung (4), die mit dem zweiten Drehmoment-Übertragungselement (1) zur Drehung verbunden ist und eine ringförmige Kammer (9) aufweist, in die die Druckfedern (10) angeordnet sind, wobei die ringförmige Kammer (9) eine Umfangsfläche aufweist, die gegenüber einer äußeren Umfangsfläche des Ringelementes angeordnet ist, wobei ein vorbestimmter Zwischenraum zwischen der äußeren Umfangsfläche des Ringelements und der Umfangsfläche der ringförmigen Kammer geschaffen ist.

3. Torsionsschwingungsdämpfer gemäß Anspruch 2, wobei die Antriebsplattenanordnung (4) ein Paar erster und zweiter Antriebsplatten (41, 42) aufweist, die zwischen den ringförmigen Kammern (9) definiert sind, wobei die ersten und zweiten Antriebsplatten Verbindungsenden aufweisen, die sich umfangsmäßig entlang der ringförmigen Kammer (9) erstrecken und die an den Verbindungsenden zusammen verbunden sind, um somit eine einstückige Einrichtung zu bilden.

## Revendications

1. Amortisseur de vibrations torsionnelles comprenant :
une paire de premier et second éléments de transmission de couple (1, 5) pouvant tourner l'un par rapport à l'autre ;
un moyeu amortisseur (206 ; 306) connecté au premier élément de transmission de couple (5) pour tourner avec celui-ci et ayant une pluralité de bras de moyeu radiaux espacés circonférentiellement (206a ; 306a) ;
une pluralité de ressorts de compression (10) disposés entre le second élément de transmission de couple (1) et les bras de moyeu (206a ; 306a) ; et
un élément anneau (221 ; 321) disposé radialement à l'extérieur des ressorts de compression (10) et ayant une surface circonférentielle intérieure maintenue en contact avec les limites radialement extérieures (10a) des ressorts de compression (10) ;
**caractérisé en ce que**
soit ledit élément anneau (221) a une section transversale rectangulaire et a au niveau de la surface circonférentielle intérieure une rainure circulaire (223), les bras de moyeu (206a ; 306a) du moyeu amortisseur (206 ; 306) ayant des parties d'extrémité radialement extérieure (206b) placées de manière circonférentiellement mobile dans la rainure de l'élément anneau (21) et ainsi supportant de manière circonférentiellement mobile l'élément anneau (21) ;
soit
lesdits bras de moyeu (206a ; 306a) du moyeu amortisseur (206 ; 306) ont à des parties d'extrémité radialement extérieure de celui-ci des rainures partiellement circulaires dans lesquelles l'élément anneau (321) est placé de manière circonférentiellement mobile.

2. Amortisseur de vibrations torsionnelles selon la revendication 1, comprenant en outre un ensemble formant plaque d'entraînement (4) connecté au second élément de transmission de couple (1) pour tourner avec celui-ci et ayant une chambre annulaire (9) dans laquelle les ressorts de compression (10) sont disposés, la chambre annulaire (9) ayant une surface circonférentielle disposée à l'opposé sur une surface circonférentielle extérieure de l'élément anneau, dans lequel un espace prédéterminé est prévu entre la surface circonférentielle extérieure de l'élément anneau et la surface circonférentielle de la chambre annulaire.

3. Amortisseur de vibrations torsionnelles selon la revendication 2, dans lequel l'ensemble formant plaque d'entraînement (4) comprend une paire de première et seconde plaques d'entraînement (41, 42) qui définissent entre elles la chambre annulaire (9), les première et seconde plaques d'entraînement ayant des extrémités de jonction s'étendant circonférentiellement le long de la chambre annulaire (9) et jointes ensemble aux extrémités de jonction afin de constituer un ensemble intégré.
